# EUROPEAN PATENT SPECIFICATION

(11) **EP 1 587 358 B1**
(45) Date of publication and mention of the grant of the patent: **20.09.2006**
(21) Application number: 04704691.7
(22) Date of filing: 23.01.2004
(51) Int. Cl.: A01D 34/416

(54) **A CUTTING HEAD FOR A BRUSH CUTTER, EDGE TRIMMER OR SIMILAR**
SCHNEIDKOPF FÜR BUSCHMÄHER, KANTENTRIMMER ODER DERGLEICHEN
TETE DE COUPE POUR UNE DEBROUSSAILLEUSE, POUR UN TAILLE-BORDURES OU ANALOGUE

(30) Priority: 23.01.2003 FR 0300713
(43) Date of publication of application: 26.10.2005
(73) Proprietor: SPEED FRANCE, 69400 Arnas (FR)
(72) Inventor: LEGRAND, Emmanuel, F-01480 Villeneuve (FR)
(74) Representative: Le Forestier, Eric
(86) International application number: PCT/IB2004/000819
(87) International publication number: WO 2004/064494

(56) References cited:
- EP-A- 0 824 854
- US-A- 4 335 510
- US-B1- 6 401 344

## Description

The present invention relates in general to the field of spinning-string implements for cutting vegetation, such as mowers, trimmers, etc.

In implements of this type, one or more cutter strings taken from a supply as the string wears away, or else in the form of individual strands that are replaced when worn, need to be locked firmly relative to the rotary cutting head on which they are mounted.

In this respect, various techniques are known for locking the string.

One of those techniques makes use of a moving locking element such as cam which is urged by a spring and/or by the centrifugal force generated during rotation of the head so as to exert pressure on the string, a supporting backing wall being provided opposite the locking element in order to hold the string locally captive between the element and the supporting wall. Documents US-A-4 301 642, US-A-4 355 510, and EP-A-0 824 854 give examples of those techniques.

To improve the locking effect, it is also known to provide the locking element with a series of teeth capable of anchoring better in the material of the string (generally made of polyamide), see e.g. US-B-6401344.

In spite of those provisions, it can happen that the string is not retained in the head with sufficient effectiveness. Under such circumstances, traction forces exerted on the string, in particular when the cutter string encounters obstacles or vegetation that are particularly hard or thick, can cause the string to move relative to the locking device, and possibly (for strands of string) slide out from the head.

That drawback can also appear particularly easily when the string is made in full or in part out of materials that are hard (such as a special or filled polyamide), and/or when the string presents a section that such contact between the string and the locking element is not good.

The present invention seeks to mitigate those limitations in the prior art and to propose improved string locking.

To this end, the invention provides a cutting head for a brush cutter, edge trimmer or similar, the head being of the type including a passage for a cutter string and a moving element for locking the string, suitable for locking the string between itself and a backing wall, the head being characterized in that the locking element presents a section in a direction extending transversely to the string that presents at least one indentation, with contact being made between the locking element and the string at least on either side of the indentation.

Certain preferred, but non-limiting aspects of the cutting head are as follows:
**·** the locking element includes arrangements for gripping the string;
**·** the gripping arrangements comprise teeth;
**·** the locking element includes a longitudinal groove;
**·** the groove presents a rounded section;
**·** the groove presents an angular section;
**·** the groove presents a rectangular section;
**·** the groove is of width smaller than the width of the string;
**·** the locking element is of section substantially complementary to the section of the string;
**·** the groove presents a V-shaped section;
**·** the groove presents a circularly arcuate section;
**·** the locking element comprises a cam; and
**·** the locking element comprises a shoe that is movable in translation.

The invention also provides a vegetation cutting device such as a brush cutter, edge trimmer or similar, characterized in that it includes a cutting head as defined above and a motor suitable for driving said head in rotation.

Other aspects, aims and advantages of the present invention will appear more clearly from the following detailed description of the preferred embodiments of the latter, given by way of non-limitative example and made with reference to the appended drawings in which:
Figures 1 to 3 are three views in side elevation illustrating a cutting head according to one embodiment of the invention.
Figure 4 is a plan view of a generally disc-shaped part constituting a portion of a cutting head according to the invention.
Figure 5 is a profile view of two disc-shaped parts assembled to form the cutting head.
Figure 6 is a profile view of a generally disc-shaped intermediate part that can, with two other parts, form another cutting head according to the invention.
Figure 7 is a profile view of this other cutting head in the assembled state.
Figure 8 is a schematic plan view of the cutting head in Figure 7, with four strands of cutting string mounted in the latter.
Figure 8A shows in perspective a curved bearing zone defined by the cutting head for one of the strands.
Figure 9 illustrates a detail of the disc-shaped part in Figure 4, fitted with a device for locking a strand of string.
Figure 10 is a view in cross-section along the line X-X in Figure 9.
Figure 11 is a cross-sectional view of a first variant of embodiment of the string locking device.
Figure 12 is a view in perspective of a locking member belonging to the locking device in Figure 11.
Figure 13 is a cross-sectional view of a second variant of embodiment of the string locking device.
Figure 14 is a cross-sectional view of a third variant of the string locking device.
Figure 15 is a plan view of a fourth variant of the string locking device, and
Figure 16 is a view in section along the line XVI-XVI in Figure 15.

It will be noted as a preliminary matter that, from one figure to the other, the identical or similar elements or parts have, wherever possible, been identified by the same reference marks.

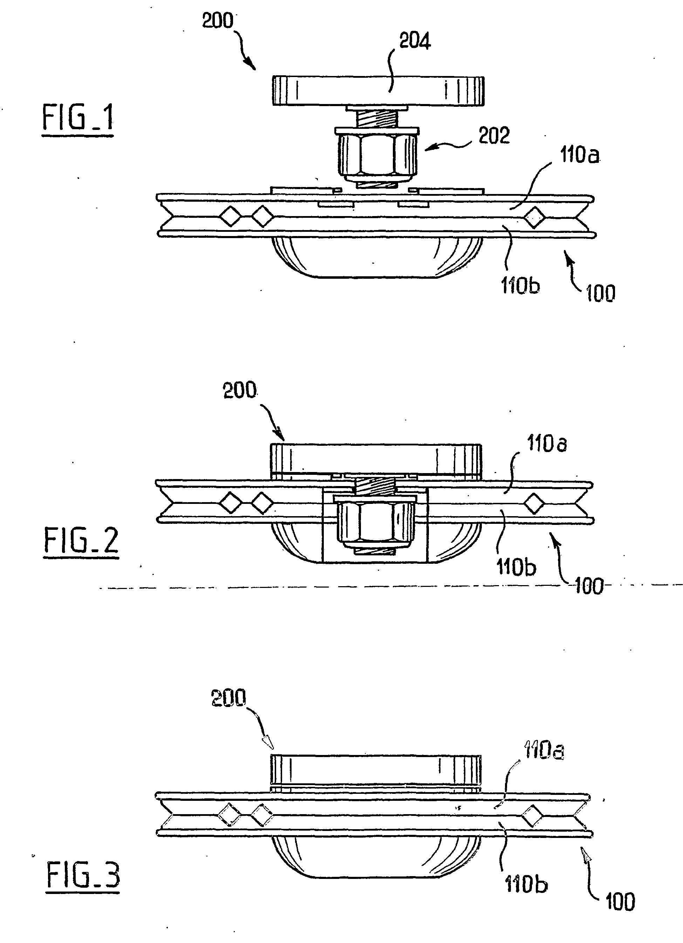

Figures 1 to 3 represent a cutting head for a brush cutter, edge trimmer and similar according to the invention, globally identified by the reference 100, suitable for being mounted on the extremity of a drive shaft 200 provided for the purpose, fixing arrangements 202 (washer, nut, mechanism of indexation in rotation), as well as a counterplate intended to cooperate with the said fixing arrangements in a manner completely conventional in itself.

The cutting head is implemented here by overlaying and assembling two disc-shaped parts 110a and 110b concentric with the axis of rotation of the drive shaft 200 and comprising, on their faces turned one towards the other, arrrangements for running of strands of string and for retaining those strands as will be seen in detail below.

Figure 1 illustrates the cutting head 100 before assembly to the shaft 200, whereas Figures 2 and 3 illustrate, respectively in a view with partial cutaway and a view in elevation, the cutting head mounted on the shaft.

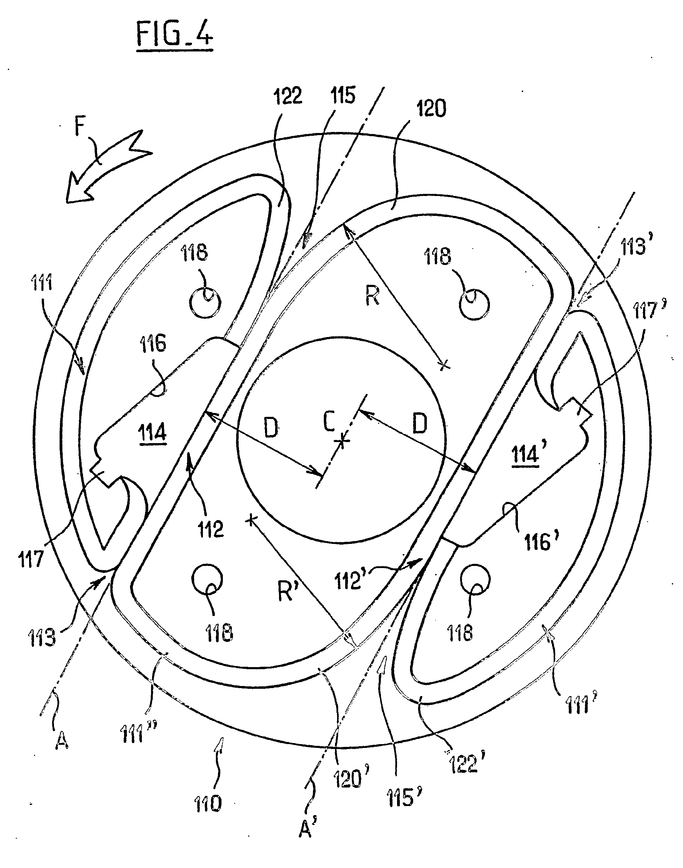

With reference now to Figure 4, this shows a disc-shaped part 110 (possibly one of the parts 110a and 110b in Figures 1 to 3) contributing to the implementation of the cutting head. It is provided with a central orifice 1100 through which the drive shaft 200 can pass.

This part 110 comprises a set of 45° bevels 111, 111' (outer bevels) and 111" (central bevel) delimiting internally the portions of the part that are raised and externally the portions of the part that are recess. The overall contour of the bevels is here circular and follows the contour of the disc, set back at a certain distance from this contour.

In particular, two bevels 111, 111'' extend in a rectilinear and adjacent manner the one to the other to delimit a first zone 112 of cutting string strand passageway, this passageway opening onto the outside at a first opening 113 and a second opening 115, for the outlet of a strand of a cutting string. The axis A along which the zone 112 extends is situated a certain distance, marked D, from the centre C of the disc-shaped part.

At the opening 113, the radius of curvature of the bevels is small, it being simply to guide the strand of string when it is put in place.

At the string outlet 115, the bevel 111'' defines a curved bearing zone 120, connected for preference without change of slope on the one hand with the string passageway zone 112 and on the other hand with the circular peripheral zone formed jointly by the three bevels. This curved bearing zone 120 supports the strand of string during cutting, in particular when, when the cutting head rotates, it encounters obstacles resisting cutting and causing it to give way (the direction of rotation of the cutting head being given by the arrow F). It is important to note here, according to one aspect of the invention, that, due to the lateral offset of the string passageway 112 in relation to the centre C of the part 110, that is in relation to the axis of rotation of the cutting head, it is possible to give the curved bearing zone 120 a radius of curvature which is much greater than that which could be achieved, as in the prior art, with a string passageway extending geometrically from the centre C.

Specifically, in the case of the prior art, knowing that the central zone of the cutting head is necessarily occupied by the shaft, very little room is available in the axial direction for implementing on the one hand the locking of the strand of cutting string, and on the other hand the curved bearing surface.

On the contrary, due to the arrangement of the invention, a much greater radius of curvature R can be envisaged and this can (at least locally) be equal to or even significantly greater than the distance D.

It will be noted here that the curved bearing zone may have any curved geometric shape required (circular, with circular sectors of different radius, elliptical, parabolic, etc.). It will be understood in particular that there may be one or more constant radii of curvature, and/or one radius of curvature varying continuously.

Due to a less pronounced curvature of the curved bearing zone, the actions are very considerably reduced as is the fatigue of the strand of string, because the material of the latter is much less stressed, and this is particularly important with modern cutting strings comprising arrangements (teeth, etc.) intended to facilitate cutting, and/or arrangements (recesses, protrusions, etc) intended to reduce noise during rotation, and/or zones of different materials (filled polyamides, etc.) intended for example to increase wear resistance.

The disc-shaped part 110 also comprises, on a section of the string strand passageway zone 112, a cavity 114 intended to receive a string locking shoe that will be described later. For the moment, mention will be made here that this cavity opens out onto the string passageway zone and comprises on the opposite side a vertical, unbevelled surface oriented at an angle relative to the axis A of the string passageway 112, and also comprises, adjacent to the extremity of the surface 116 furthest away from the axis A, a blind recess 117 intended for the wedging of a shoe pressure spring as will be seen in detail later.

Also represented in Figure 4 are holes 118 suitable for being traversed by screws or studs for the assembly of the part 110 with one or more other disc-shaped parts, designed in similar manner.

Finally, Figure 4 shows that the part 110 comprises, with a symmetry of revolution of 180° relative to the arrangements described above, some second passageway, bearing and locking arrangements for a second strand of string, these arrangements being indicated by the same reference marks plus a "prime" mark.

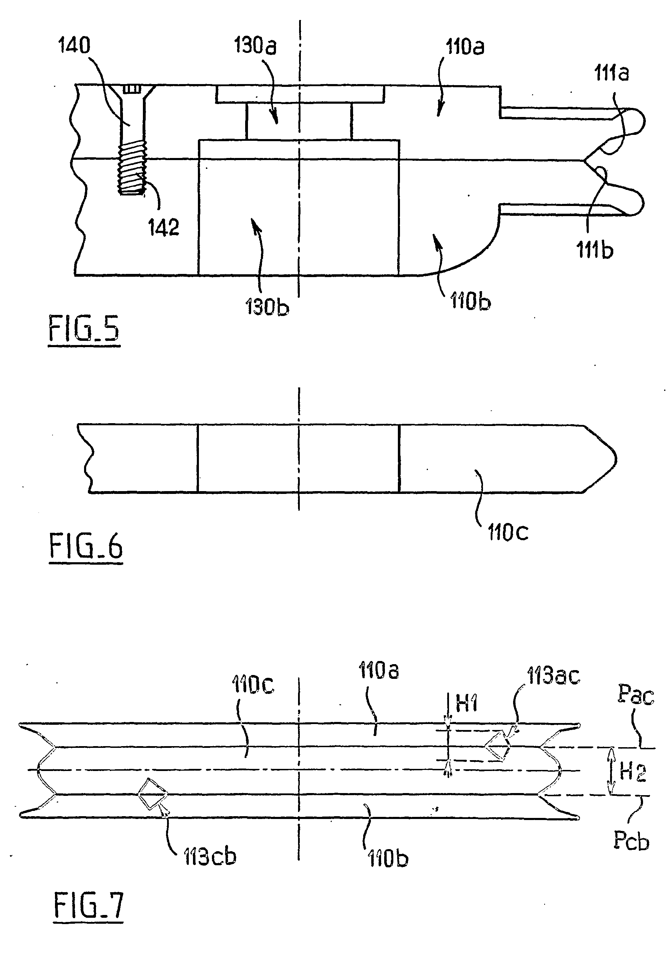

Figure 5 shows in greater detail a cutting head implemented by assembling a first disc-shaped part 110a, comprising the arrangements as illustrated in figure 4, and a second disc-shaped part 110b comprising corresponding arrangements, with a mirror symmetry, such that all these arrangements are placed on top of their counterparts belonging to the other part 110a during assembly.

It is understood that such an assembly forms string strand passageways in regular lozenge shape. By using strands of cutting string of generally square cross-section and slightly smaller than the cross-section of the passageways formed in the head, these passageways retain the strands in an inclination such that it is a ridge of each string strand which will constitute a leading zone for cutting, to thus improve cutting efficiency.

It will be observed however that such a head may be used with cutting string strands of any cross-section, provided that they can be engaged without being trapped in a string passageway.

It is understood that, on the basis of the arrangements as described with reference to Figure 4, Figure 5 implements a cutting head with two strings situated at the same level in vertical direction and exiting from the head in an oblique direction relative to a strictly radial direction, in two diametrically opposed places.

Figure 6 illustrates in elevation another disc-shaped part 110c, constituting a third intermediate part of the head.

This part 110c comprises two sets of arrangements like those represented in Figure 4, respectively on each of its two faces, with preferably a mutual offset of 90°. One of these sets of arrangements forms counterpart arrangements of those of the part 110a, whereas the other of these sets of arrangements forms counterpart arrangements of those of the part 110b. As a corollary, to fit the intermediate part 110c, the arrangements of the parts 110a and 110b are mutually offset at a 90° angle.

It is understood that, in this way, a cutting head is implemented comprising an upper level with two string strands with diametrically opposed outlets, and a lower level with two other string strands with diametrically opposed outlets also, but offset by 90° in relation to the first ones.

This cutting head is illustrated in elevation in Figure 7. Shown in this figure are two openings, respectively 113ac and 113cb, offset at an angle of 90° and belonging respectively to the two levels, the openings for the outlet of the strings not having been represented in this figure.

It has been observed that such an arrangement of strings, with two levels, advantageously provided chopping of the cut plant material when the distance between the planes of the string levels was well chosen. More particularly, and still with reference to Figure 7, it has been observed that, if the distance H2 between the respective planes Pab and Pbc of the two string levels is equal to or greater than approximately 1.8 times the height H1 of a string (corresponding substantially to the height of its passageway), and preferably equal to or less than approximately 5 times this same height H1, then particularly satisfactory chopping is obtained. For example, with a string of square cross-section with a side length of 4 mm, that is a diagonal measuring approximately 5.6 mm, the height offset between the two cutting planes is greater than approximately 10 mm.

In such a configuration, chopping is equally favoured if, as described above, the string outlets are offset at an angle to one another. For preference, and as also described, this offset is such that, in circumferential direction, the string outlets are regularly spaced.

However, irregularly spaced string outlets (which is obtained in particular if the angular offset between the arrangements of the upper level and those of the lower level is not 90°), a satisfactory result is also obtained.

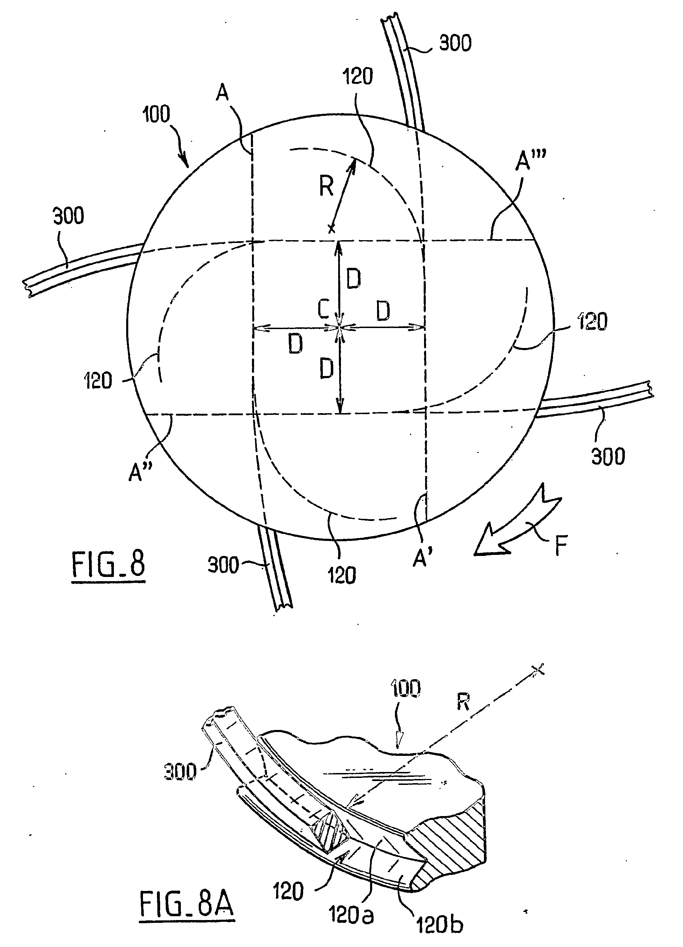

Figure 8 represents a schematic view from above of the cutting head in Figure 7. Installed in this cutting head are three strands of string 300 which project at the string outlet 115 and which stop substantially at the openings 113. Also represented in this figure are the curved bearing surfaces 120 for the strands of string. The direction of rotation of the head is illustrated by the arrow F.

In addition, it is understood in the light of the foregoing that by using two intermediate parts of the type of part 110c, or more, and two terminal parts 110a and 110, a head can be implemented with any number of levels.

For example, by using an intermediate part that has its upper and lower arrangements mutually offset by 60°, and by providing two of such intermediate parts between the upper and lower parts 110a, 110b, a three-level cutting head is implemented with string outlets regularly distributed in a circumferential direction.

Figure 8A illustrates in perspective the curved bearing surface 120 formed by the head for one individual strand of string 300, represented by a part of its length.

It is understood that such a curved bearing surface is formed by the curved bearing zones 120a, 120b of the two adjacent disc-shaped parts 110a and 110b (in the case of a version such as the one in Figure 5), which in turn belong to the 45° bevels 111'' of the respective parts.

This curved bearing surface therefore presents a V-shaped profile with a 90° bottom angle, that is a profile suited to the cross-section of the string 300 at the outlet of its passageway. Such a bearing surface is therefore used to retain the string in its optimal cutting orientation at all times, and in particular when, under the effect of resistance from the plants, it comes to rest against the bearing surface 120.

Naturally, the profile of the curved bearing surface will be adapted according to the type of cross-section of the string. In this regard, even in the case of a string of circular cross-section, it can be envisaged that the string rests on a curved bearing zone having a recessed circular profile. This minimizes the fatigue of the string and increases the cutting efficiency by stabilizing its trajectory in the cutting plane when it comes to rest against the said zone. In particular, it avoids wasting kinetic energy in a direction transverse to the direction of cutting (vertical direction in use).

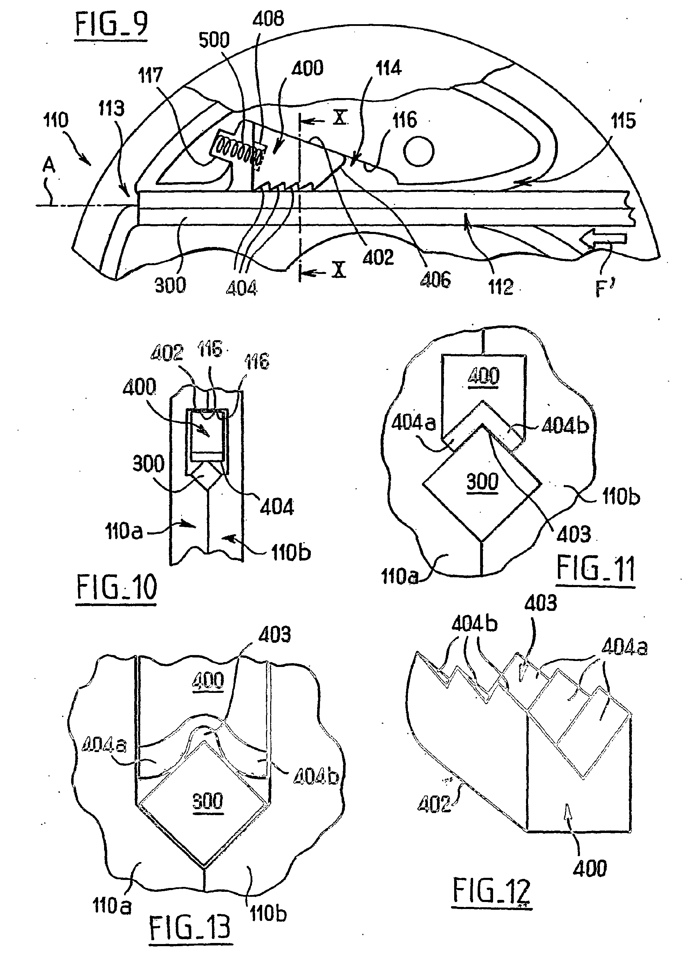

Figures 9 and 10 illustrate the string locking mechanism, mounted inside a pair of disc-shaped parts (parts 110a and 110b in the basic form of implementation with a single cutting level). This mechanism comprises a shoe 400 placed in a housing defined by the cavity 114 formed in one of the disc-shaped parts (see Figure 4), here 110a, and by the counterpart cavity defined in the other disc-shaped part, here 110b, which is juxtaposed to it.

This shoe 400 possesses a first face possessing a plurality of teeth 404 extending transversely to the axis A of the string passageway 112 and intended to bite into the cutting string 300 engaged in the said passageway 112, and an opposite face 402 extending at an oblique angle relative to the abovementioned first face and intended to rest against the rear face of its housing, defined by the faces 116 of the two disc-shaped parts.

A pressure spring 500 acts between a spring seat defined jointly by the blind recesses 117 of the two disc-shaped parts, and a recess 408 formed in a pressure region of the shoe 400, situated in the region of greatest height of the said shoe.

On the opposite side (front side), the shoe possesses an inclined section 406 directed at an oblique angle towards the top from the tooth 404 situated furthest forward.

The cutting strand of string 300, pre-cut to the required length, is engaged in its passageway 112 from its outlet opening 115, in the direction of the arrow F' in Figure 9. Thus, it pushes back the shoe 400 against the (moderate) force of the spring 500, the shoe thus being able to rise by sliding against the rear face 116, 116 of its housing by the amount necessary to let the strand of string pass. The strand of string is pushed preferably until its left-hand extremity in Figure 9 reaches the region of the opening 113, as illustrated in this same figure. The operator can thus ensure that the string has been fully engaged beyond the locking shoe. It will be noted here that the inclined front section 406 guides the strand of string so that it passes correctly under the shoe 400, on the toothed side.

It is well understood that, as soon as a pulling force is exerted on the strand of string in the direction opposite to the arrow F', which is typically the case when the device is working, by friction and impacts against the plants, the shoe 400, which actes as a one-way lock, tends to exert on the strand of string 300, through its teeth 404, a retention force by gripping which is all the greater as the pulling force increases, this being so due to the inclined face 116, 116 of the housing, providing a wedge effect in cooperation with the face 402 of the shoe.

Particular advantages of such a locking mechanism with sliding shoe, in particular when compared with the known mechanisms with toothed cam or similar, reside on the one hand in that the retention force exerted on the strand of string by the shoe, supported extremely firmly and solidly by the rear surface 116, 116 of the shoe housing 114, 114, can be extremely strong and on the other hand in that the extent, according to the length of the string 300, over which the teeth 404 cooperate with the string, can be much greater than with a known cam mechanism.

Other advantages are (i) that the strand of string can be easily inserted into the passageway through the opening 115 and easily removed from the passageway through the opposite opening 113, both being located at the periphery of the head, and (ii) that the locking mechanism can be placed between the passageway 112 and the periphery of the head, i.e. without interfering with the central region of the head in which the arrangements (recess for shaft and nut) for mounting the head on the cutting device are to be positioned.

In the embodiment in Figures 9 and 10, and as is shown in Figure 10, the teeth 404 retaining the strand of string extend in a rectilinear manner in a direction transverse to the string.

According to another advantageous aspect, it can be envisaged that the string strand locking element (moreover whether it is a sliding shoe, a pivoting cam, or any other gripping element), is shaped in a manner to improve the retention of the string.

Thus, while in Figures 9 and 10 the cooperation between the teeth 404 and the string occurs simply at the level of the string ridge situated opposite the shoe, it is envisaged, as illustrated in Figures 11 and 12, that the teeth adopt a profile suited to the shape of the string. In these figures, there are two series of teeth 404a, 404b oriented at 90° to one another to form a profile comprising a recess 403. As a result, each series of teeth may cooperate with a whole face, or a substantial part of such a face, of a string in the case in point of a square cross-section, and the extent of the cooperation between the shoe and the string to retain the latter is further increased.

More generally, any recessed profile can be envisaged at the level of the teeth of the shoe 400 to better receive the string, irrespective of the shape of the cross-section of the latter.

Thus Figure 13 illustrates the case in which the region of the teeth of the shoe 400 has a profile with a central curved recess, and two series of teeth 404a, 404b of convex profile either side of this recess. In this case, it is primarily the double row of contact between the teeth and the string which increases the gripping force.

It will be observed here that the locking shoes in Figures 11, 12 and 13 have an improved string retention efficiency not only with a string of square cross-section disposed as a lozenge, as described, but also with many other cross-sections of string, and in particular a circular cross-section.

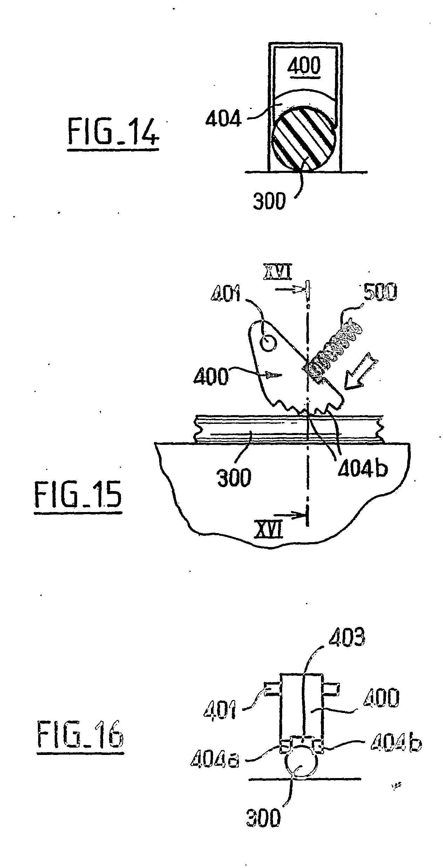

Figure 14 for its part illustrates the case in which, with a cutting string 300 of circular cross-section, use is made of a row of teeth 404 having a convexity suitable for receiving the string, with a radius of curvature of the string and a radius of curvature of the profile of the teeth preferably similar to one another.

It is understood that the use of the string locking element with a recessed profile zone of contact with the string applies not only to the case of a shoe, but also to the case of an element of another type such as a cam.

Thus Figures 15 and 16 illustrate the locking of a cutting string 300, in this case of circular cross-section, with the aid of a cam 400 mounted on a pivot 401 and acted upon by a pressure spring 500. The teeth 404 are disposed on a circular sector eccentric in relation to the axis of rotation defined by the pivot 401.

It is observed in this embodiment that the cam has two rows of teeth 404a, 404b generally straight in the extension of one another (see Figure 16), these two rows being separated by a central groove 403. Such a profile of teeth here further improves the locking of the string with many shapes of string.

Naturally, the present invention is not limited to the embodiments described and represented, and those skilled in the art will be able to provide many variants and modifications.

Moreover, it is understood that the different aspects of the new cutting head described in the foregoing may most frequently be implemented independently of one another or combined in different manners.

## Claims

1. A cutting head for a brush cutter, edge trimmer or similar, the head being of the type including a passage for a cutter string (300) and a moving element (400) for locking the string, suitable for locking the string between itself and a backing wall, the head being **characterized in that** the locking element presents a section in a direction extending transversely to the string that presents at least one indentation (403), with contact being made between the locking element and the string at least on either side of the indentation.

2. A cutting head according to claim 1, **characterized in that** the locking element (400) includes arrangements (404) for gripping the string.

3. A cutting head according to claim 2, **characterized in that** the gripping arrangements comprise teeth (404).

4. A cutting head according to claim 1, **characterized in that** the locking element includes a longitudinal groove (403).

5. A cutting head according to claim 4, **characterized in that** the groove presents a rounded section.

6. A cutting head according to claim 4, **characterized in that** the groove presents an angular section.

7. A cutting head according to claim 6, **characterized in that** the groove presents a rectangular section.

8. A cutting head according to any one of claims 4 to 7, **characterized in that** the groove is of width smaller than the width of the string (300).

9. A cutting head according to any one of claims 1 to 7, **characterized in that** the locking element (400) is of section substantially complementary to the section of the string.

10. A cutting head according to claim 1 or claim 9, **characterized in that** the groove presents a V-shaped section.

11. A cutting head according to claim 1 or claim 9, **characterized in that** the groove presents a circularly arcuate section.

12. A cutting head according to any one of claims 1 to 11, **characterized in that** the locking element (400) comprises a cam.

13. A cutting head according to any one of claims 1 to 11, **characterized in that** the locking element (400) comprises a shoe that is movable in translation.

14. A vegetation cutting device such as a brush cutter, edge trimmer or similar, **characterized in that** it includes a cutting head according to any one of claims 1 to 13 and a motor suitable for driving said head in rotation.

## Patentansprüche

1. Schneidkopf für einen Buschschneider, Kantentrimmer oder dergleichen, wobei der Kopf von solcher Bauart ist, die einen Durchgang für einen Schneidfaden (300) und ein sich bewegendes Element (400) zum Festklemmen des Fadens, das dazu geeignet ist, den Faden zwischen sich und einer Abstützwand zu arretieren, enthält, wobei der Kopf **dadurch gekennzeichnet ist, dass** das Klemmelement in einer quer zum Faden verlaufenden Richtung einen Querschnitt hat, der wenigstens eine Einkerbung (403) aufweist, wobei zwischen dem Klemmelement und dem Faden auf zumindest jeder Seite der Einkerbung ein Kontakt hergestellt ist.

2. Schneidkopf nach Anspruch 1, **dadurch gekennzeichnet, dass** das Klemmelement (400) Einrichtungen (404) zum Greifen des Fadens umfasst.

3. Schneidkopf nach Anspruch 2, **dadurch gekennzeichnet, dass** die Greifeinrichtungen Zähne (404) umfassen.

4. Schneidkopf nach Anspruch 1, **dadurch gekennzeichnet, dass** das Klemmelement eine Längsnut (403) enthält.

5. Schneidkopf nach Anspruch 4, **dadurch gekennzeichnet, dass** die Nut einen gerundeten Querschnitt aufweist.

6. Schneidkopf nach Anspruch 4, **dadurch gekennzeichnet, dass** die Nut einen eckigen Querschnitt aufweist.

7. Schneidkopf nach Anspruch 6, **dadurch gekennzeichnet, dass** die Nut einen rechteckigen Querschnitt aufweist.

8. Schneidkopf nach einem der Ansprüche 4 bis 7, **dadurch gekennzeichnet, dass** die Nut eine Breite hat, die kleiner ist als die Breite des Fadens (300).

9. Schneidkopf nach einem der Ansprüche 1 bis 7, **dadurch gekennzeichnet, dass** das Klemmelement (400) einen Querschnitt hat, der im Wesentlichen komplementär zu dem Querschnitt des Fadens ist.

10. Schneidkopf nach Anspruch 1 oder Anspruch 9, **dadurch gekennzeichnet, dass** die Nut einen V-förmigen Querschnitt aufweist.

11. Schneidkopf nach Anspruch 1 oder Anspruch 9, **dadurch gekennzeichnet, dass** die Nut einen kreisförmigen Querschnitt aufweist.

12. Schneidkopf nach einem der Ansprüche 1 bis 11, **dadurch gekennzeichnet, dass** das Klemmelement (400) eine Nocke umfasst.

13. Schneidkopf nach einem der Ansprüche 1 bis 11, **dadurch gekennzeichnet, dass** das Klemmelement (400) einen Schuh umfasst, der verschiebbar ist.

14. Vegetationsschneidvorrichtung wie beispielsweise ein Buschschneider, Kantentrimmer oder dergleichen, **dadurch gekennzeichnet, dass** sie einen Schneidkopf nach einem der Ansprüche 1 bis 13 und einen Motor, der zum Drehantreiben des Kopfes geeignet ist, enthält.

## Revendications

1. Tête de coupe pour débrousailleuse, coupe-bordures ou analogue, du type comprenant un passage pour un fil de coupe (300) et un élément mobile (400) de blocage de fil, apte à bloquer le fil entre lui-même et une contre-paroi, **caractérisée en ce que** l'élément de blocage présente dans une direction transversale au fil un profil présentant au moins un creux (403), avec un contact de l'élément de blocage avec le fil au moins de part et d'autre du creux.

2. Tête de coupe selon la revendication 1, **caractérisée en ce que** l'élément de blocage (400) comprend des aménagements (404) d'agrippement avec le fil.

3. Tête de coupe selon la revendication 2, **caractérisée en ce que** les aménagements d'agrippement comprennent des dents (404).

4. Tête de coupe selon la revendication 1, **caractérisée en ce que** l'élément de blocage comprend une rainure longitudinale (403).

5. Tête de coupe selon la revendication 4, **caractérisée en ce que** la rainure présente un profil arrondi.

6. Tête de coupe selon la revendication 4, **caractérisée en ce que** la rainure présente un profil anguleux.

7. Tête de coupe selon la revendication 6, **caractérisée en ce que** la rainure présente un profil rectangulaire.

8. Tête de coupe selon l'une des revendications 4 à 7, **caractérisée en ce que** la rainure présente une largeur inférieure à celle du fil (300).

9. Tête de coupe selon l'une des revendications 1 à 7, **caractérisée en ce que** le profil de l'élément de blocage (400) est sensiblement complémentaire de la section du fil.

10. Tête de coupe selon l'une des revendications 1 et 9, **caractérisée en ce que** la rainure présente un profil en « V ».

11. Tête de coupe selon l'une des revendications 1 et 9, **caractérisée en ce que** la rainure présente un profil en forme d'arc de cercle.

12. Tête de coupe selon l'une des revendications 1 à 11, **caractérisée en ce que** l'élément de blocage (400) comprend une came.

13. Tête de coupe selon l'une des revendications 1 à 11, **caractérisée en ce que** l'élément de blocage (400) comprend un patin mobile en translation.

14. Appareil de coupe tel que débrousailleuse, coupe-bordures ou analogue, **caractérisé en ce qu'**il comprend une tête de coupe selon l'une des revendications 1 à 13, et un moteur apte à entraîner en rotation ladite tête de coupe.
